# EUROPEAN PATENT APPLICATION

(11) **EP 3 343 835 A1**
(43) Date of publication of application: **04.07.2018**
(21) Application number: 16838419.6
(22) Date of filing: 21.06.2016
(51) Int. Cl.: H04L 12/24

(54) **NETWORK ELEMENT MANAGEMENT METHOD AND SYSTEM**

(30) Priority: 24.08.2015 CN 201510524703
(71) Applicant: ZTE Corporation, Shenzhen, Guangdong 518057 (CN)
(72) Inventor: YUAN, Liquan, Shenzhen Guangdong 518057 (CN)
(74) Representative: Regimbeau
(86) International application number: PCT/CN2016/086610
(87) International publication number: WO 2017/032159

(57) **Abstract**

Provided is a network element management method and system. The network element management method includes operating the network element management system to receive network element management instructions from different operators, where management domains in one-to-one correspondence with operators are created in the network element management system, and the management domains are independent of each other; and operating the network element management system to centrally manage network elements according to the network element management instructions received from the different operators.

## Description

### TECHNICAL FIELD

The present application relates to, but is not limited to, communication equipment management and, in particular, relates to a network element management method and system.

### BACKGROUND

Network elements (NEs) in a communication system are generally managed by an element management system (EMS). The EMS is typically installed on a computer server in a network and has one or more network interfaces. The EMS is connected through the network to network elements that need to be managed. Generally, the EMS and the network elements use Simple Network Management Protocol (SNMP) or Network Control Protocol (NETCONF). An operator can access the EMS through an Internet Protocol (IP) address.

The existing EMS can manage more than 1000 network elements. The operator can use the EMS to either configure and detect the running of the network elements or read and receive related data from the network elements to determine configuration and running status of the network elements so as to implement deployment, management and maintenance of the network elements.

The existing EMS is generally provided by a network element manufacturer. Generally, the management of the network elements by the EMS may be differentiated according to user attributes. User attributes are used for indicating which parameters of the network elements can be managed by a user. Parameters of the network elements that can be managed vary with different user attributes. However, these user attributes are for the entire network management system, and these users belong to one network element operator.

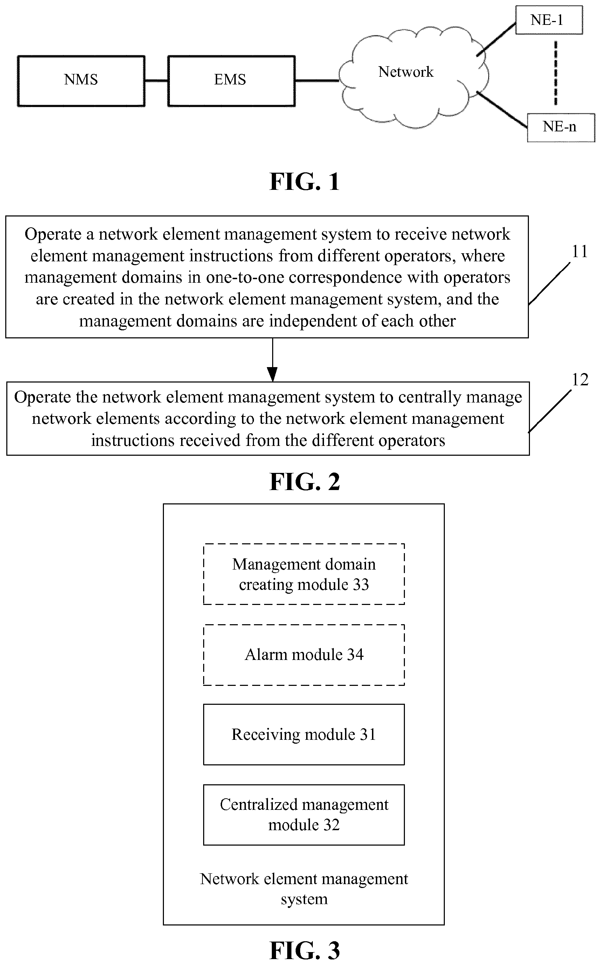

FIG. 1 is a schematic diagram illustrating a connection of an element management system to a network management system and connections of the element management to network elements in the related art. As shown in FIG. 1, the element management system in the related art corresponds to the network management system (NMS) of only one operator, i.e., in the EMS in the related art, the network elements are managed and configured by only one operator.

### SUMMARY

The following is a summary of a subject matter described herein in detail. This summary is not intended to limit the scope of the claims.

As more and more sharing of a basic network is required, one network element needs to be shared so as to be managed and configured by multiple operators at the same time. Therefore, how to support multiple operators in a network element management system is a problem to be solved.

The present invention provides a network element management method and a network element management system to solve the problem in which it is impossible to support multiple operators in the network element management system in the related art.

The network element management method includes operating the network element management system to receive network element management instructions from different operators, where management domains in one-to-one correspondence with operators are created in the network element management system, and the management domains are independent of each other; and operating the network element management system to centrally manage network elements according to the network element management instructions received from the different operators.

Optionally, before the operating the network element management system to receive the network element management instructions from the different operators, the method further includes:
operating the network element management system to create a basic operator; and
operating the network element management system to configure the management domains in one-to-one correspondence with the operators through the basic operator.

Optionally, each of the management domains includes one or more network elements subject to an operation authority of a respective one of the operators corresponding to the each of the management domains.

Optionally, before the operating the network element management system to receive the network element management instructions from the different operators, the method further includes: operating the network element management system to raise an alarm when a conflict occurs between the management domains corresponding to the different operators.

Optionally, before the operating the network element management system to receive the network element management instructions from the different operators, the method further includes: operating the network element management system to use different IP addresses for the different operators to implement communication between the different operators and the network element management system; or operating the network element management system to use a same IP address in different Layer 2 domains for the different operators to implement communication between the different operators and the network element management system.

Optionally, the communication between the operators and the network element management system is encrypted communication.

The network element management system includes a receiving module, which is configured to receive network element management instructions from different operators, where management domains in one-to-one correspondence with operators are created in the network element management system, and the management domains are independent of each other; and a centralized management module, which is configured to centrally manage network elements according to the network element management instructions received from the different operators.

Optionally, the system further includes a management domain creating module, which is configured to create a basic operator; and configure the management domains in one-to-one correspondence with the operators through the basic operator.

Optionally, each of the management domains includes network elements subject to an operation authority of a respective one of the operators corresponding to the each of the management domains.

Optionally, the system further includes an alarm module, which is configured to raise an alarm when a conflict occurs between the management domains corresponding to the different operators.

Optionally, communication between the network element management system and the operators is implemented through one of the following modes: the network element management system uses different IP addresses for the different operators; and the network element management system uses a same IP address in different Layer 2 domains for the different operators.

Optionally, the communication between the network element management system and the operators is encrypted communication.

A computer-readable storage medium is configured to store computer-executable instructions which, when executed by a processor, execute the method described above.

In embodiments of the present invention, the network element management system receives network element management instructions from different operators, where management domains in one-to-one correspondence with operators are created in the network element management system, and the management domains are independent of each other; and the network element management system centrally manages network elements according to the network element management instructions received from the different operators. The embodiments of the present invention provides a shared network element management system, which meets the requirement that the network element management system support multiple operators and which allows multiple operators to manage the network elements independently of each other.

Other aspects can be understood after the accompanying drawings and detailed description are read and understood.

### BRIEF DESCRIPTION OF DRAWINGS

FIG. 1 is a schematic diagram of illustrating a connection of an element management system to a network management system and connections of the element management to network elements in the related art.
FIG. 2 is a flowchart of a network element management method according to an embodiment of the present invention.
FIG. 3 is a schematic diagram of a network element management system according to an embodiment of the present invention.
FIG. 4 is a schematic diagram illustrating an application of a network element management system according to an embodiment of the present invention.

### DETAILED DESCRIPTION

Embodiments of the present invention will be described below in detail with reference to the accompanying drawings. It is to be understood that the embodiments described below are intended to explain and not to limit the present invention.

FIG. 2 is a flowchart of a network element management method according to an embodiment of the present invention. As shown in FIG. 2, the network element management method according to this embodiment includes the steps described below.

In step 11, a network element management system receives network element management instructions from different operators, where management domains in one-to-one correspondence with operators are created in the network element management system, and the management domains are independent of each other.

The network element management instructions include configuration instructions for the network elements.

Optionally, before step 11, the network element management system creates the management domains in one-to-one correspondence with the operators as follows: the network element management system creates a basic operator; and the network element management system configures the management domains in one-to-one correspondence with the operators through the basic operator.

Each management domain is configured by the basic operator according to an operation authority of a respective one of the operators corresponding to each management domain. Each management domain includes one or more network elements subject to the operation authority of the respective one of the operators corresponding to each management domain. The basic operator has the ability to configure parameters of network elements managed by the operator according to the operation authority of the operator. Management domains corresponding to other operators are configured by the basic operator. The basic operator also has the ability to manage network elements. During the initialization of the network element management system, the basic operator establishes other management domains that share the basic network operator. In the process of establishing the management domains, the basic operator ensures that the management domains are independent of each other. That is, a management object in the management domain corresponding to a certain operator cannot exist among management objects in management domains corresponding to other operators. For example, if a certain network element has 100 user interfaces that belong to different operators, then a certain interface among these user interfaces cannot belong to different operators at the same time.

Here, before step 11, the method further includes that the network element management system raises an alarm when a conflict occurs between the management domains corresponding to the different operators.

When the management domains are created, if the management domains are not independent of each other due to operation errors, verification is performed through a configured real-time detection or a tool for later detection, and then an alarm is raised for the dependency.

Running of a management domain is similar to that of an existing basic network element management system. The management protocol communication, which is common for the operator to manage the management domain, may be Transaction Language-1 (TL1) or Common Object Request Broker Architecture (CORBA).

Here, before step 11, the method further includes:
the network element management system uses different IP addresses for the different operators to implement communication between the different operators and the network element management system; or
the network element management system uses a same IP address in different Layer 2 domains for the different operators to implement communication between the different operators and the network element management system.

When the network element management system has multiple management domains, the management domains are differentiated in one of the two manners described below. In a manner, the management domains are differentiated through IP addresses. In this manner, each operator uses his or her username and password to log in to corresponding management domain, and the operator has the authority to manage only its own management domain. In another manner, a separate channel between each operator and the network element management system to differentiate between the management domains so that the network element management system can use the same IP address to communicate with the different operators. The channel is, for example, a Virtual Local Area Network (VLAN) or a Generic Routing Encapsulation (GRE) tunnel.

Here, the communication between the operators and the network element management system is encrypted communication.

To ensure secure access to the management domains in one-to-one correspondence with the operators, each operator may be assigned an encrypted information code to ensure secure access so that management communication channels between the operators and the management domains of the network element management system are encrypted. In addition, the different operators may be differentiated form each other by way of username plus domain name.

In step 12, the network element management system centrally manages network elements according to the network element management instructions received from the different operators.

The network element management system receives the network element management instructions from the different operators, and centrally manages the network elements. In this embodiment, management includes configuring the network elements. To ensure that the network element management instructions of the operators reach the network elements effectively, it is feasible to schedule delivery of related instructions by way of polling or to use different priorities according to instruction types to ensure real-time configuration so that the instructions take effect quickly.

Additionally, as shown in FIG. 3, embodiments of the present invention further provide a network element management system. The network element management system includes: a receiving module 31, which is configured to receive network element management instructions from different operators, where management domains in one-to-one correspondence with operators are created in the network element management system, and the management domains are independent of each other; and a centralized management module 32, which is configured to centrally manage network elements according to the network element management instructions received from the different operators. In practical applications, functions of the receiving module 31 and the centralized management module 32 are implemented, for example, by a computer processor executing programs/instructions stored in a memory.

Here, the system further includes a management domain creating module 33, which is configured to: create a basic operator; and configure the management domains in one-to-one correspondence with the operators through the basic operator. In practical applications, functions of the management domain creating module 33 are implemented, for example, by a computer processor executing programs/instructions stored in a memory.

Each management domain includes one or more network elements subject to the operation authority of the respective one of the operators corresponding to each management domain. Each management domain is configured by the basic operator according to operation authority of a respective one of the operators corresponding to each management domain.

In one embodiment, the system further includes an alarm module 34, which is configured to raise an alarm when a conflict occurs between the management domains corresponding to the different operators. In practical applications, functions of the alarm module 34 are implemented, for example, by a computer processor executing programs/instructions stored in a memory.

Communication between the network element management system and the operators is implemented through one of the following modes:
the network element management system uses different IP addresses for the different operators; and
the network element management system uses a same IP address in different Layer 2 domains for the different operators.

The communication between the network element management system and the operators is encrypted communication.

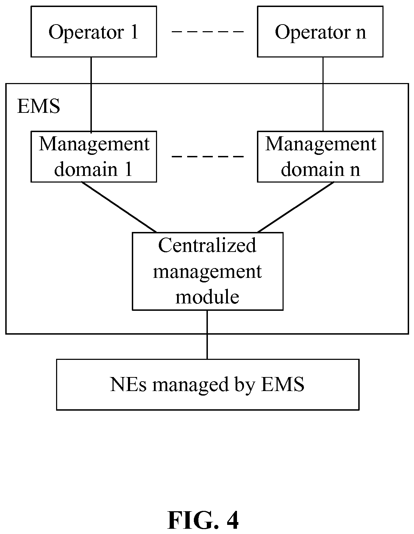

FIG. 4 is a schematic diagram illustrating application of a network element management system according to an embodiment of the present invention. As shown in FIG. 4, the network element management system is simultaneously connected to multiple operators (e.g., operators 1 to n, where n is an integer greater than 1). Operators are connected to the network element management system through their respective network management systems. Here, the network element management system creates n management domains, which are managed by the network element management system, according to the number (e.g., n) of operators sharing the network element management system, and each management domain corresponds to one operator (e.g., as shown in FIG. 3, management domain 1 corresponds to operator 1 and management domain n corresponds to operator n). Each management domain may have a different number of network elements and a different network element topology. Each network element may have a different number of interfaces. For example, a network element management system manages 100 network elements. Among the 100 network elements, 50 network elements can be managed by a certain operator. Among the 50 network elements, interfaces that can be managed and corresponding functions are limited.

To better illustrate the determination of management domains, assuming that one EMS system is connected to three operators and manages a total of 30 network elements (each network element has 100 interfaces). According to application of each operator and condition of the basic network, e.g., operator 1 manages a total of 20 network elements (e.g., network elements 1 to 10 and network elements 21 to 30, and user interfaces 1 to 50 of each network element belong to operator 1). In this way, these users and the network elements serving the users form management domain 1 corresponding to operator 1, and operator 1 can manage corresponding network elements and interfaces through management domain 1 of the EMS; operator 2, e.g., manages user interfaces 1 to 50 of network elements 11 to 20; and operator 3 manages user interfaces 51 to 100 of network elements 1 to 30. Each operator does not pay attention to all network elements in the network element management system, but only manages network elements that the each operator has the authority to manage and management parameters corresponding to the each operator. Here, network elements in a management domain refer to network elements visible to an operator, and network elements may be entity network elements or virtualized network elements. One virtualized network element may correspond to one network element entity or multiple network element entities. One network element entity can be virtualized to multiple network elements through the network element management system, and each virtualized network element can correspond to a respective operator.

In this embodiment, after collecting and verifying network element management instructions from different operators, the network element management system centrally manages managed network elements. For example, when both operator 1 and operator 2 send network element management instructions to network element 1, the centralized management module of the network element management system receives network element management instructions from management domain 1 and management domain 2 and manages network element 1 in sequence; and if the network element management instructions indicate collection of network element data, then the centralized management module of the network element management system acquires related data from the network element 1 and then sends the data to different management domains.

Embodiments of the present invention further provide a computer-readable storage medium configured to store computer-executable instructions which, when executed by a processor, executes the above-mentioned network element management method.

It will be understood by those of ordinary skill in the art that all or part of the steps in the above-mentioned embodiments may be implemented using one or more computer programs. The computer programs may be stored in a computer readable storage medium and executed on a corresponding hardware platform (e.g., system, device, apparatus or component). During the execution of these programs, one of or a combination of the steps in the above-mentioned method embodiments is implemented.

Optionally, all or part of the steps in the above-mentioned embodiments may also be implemented using one or more integrated circuits. These steps may be made into integrated circuit modules separately, or part of these modules or steps may be made into a single integrated circuit module for implementation.

The various devices/function modules/function units in the above-mentioned embodiments may be implemented on a general-purpose computing device. They may be concentrated on a single computing device or distributed over a network composed of multiple computing devices.

The various devices/function modules/function units in the above-mentioned embodiments are implemented by software function modules, and can be stored in a computer-readable storage medium when sold or used as stand-alone products. The above-mentioned computer-readable storage medium may be a read-only memory, a magnetic disk or an optical disk, etc.

The above illustrates basic principles, main features and advantages of the present invention. The present application is not limited to the above embodiments. The above embodiments and specification describe only the principle of the present invention. Various modifications and improvements may be made in the present invention without departing from scope of the present invention. These modifications and improvements are within the scope of the present invention.

### INDUSTRIAL APPLICABILITY

Through embodiments of the present invention, a shared network element management system is provided, which meets the requirements that the network element management system should support multiple operators and allows the multiple operators to manage the network elements independently of each other.

## Claims

1. A network element management method comprising:
operating a network element management system to receive network element management instructions from different operators, wherein management domains in one-to-one correspondence with the operators are created in the network element management system, and the management domains are independent of each other; and
operating the network element management system to centrally manage network elements according to the network element management instructions received from the different operators.

2. The method of claim 1, wherein before the operating the network element management system to receive the network element management instructions from the different operators, the method further comprises:
operating the network element management system to create a basic operator; and
operating the network element management system to configure the management domains in one-to-one correspondence with the operators through the basic operator.

3. The method of claim 1 or 2, wherein each of the management domains comprises one or more network elements subject to an operation authority of a respective one of the operators corresponding to the each of the management domains.

4. The method of claim 1, wherein before the operating the network element management system to receive the network element management instructions from the different operators, the method further comprises: operating the network element management system to raise an alarm when a conflict occurs between the management domains corresponding to the different operators.

5. The method of claim 1, wherein before the operating the network element management system to receive the network element management instructions from the different operators, the method further comprises:
operating the network element management system to use different Internet Protocol (IP) addresses for the different operators to implement communication between the different operators and the network element management system; or
operating the network element management system to use a same IP address in different Layer 2 domains for the different operators to implement communication between the different operators and the network element management system.

6. The method of claim 5, wherein the communication between the operators and the network element management system is encrypted communication.

7. A network element management system comprising:
a receiving module, which is configured to receive network element management instructions from different operators, wherein management domains in one-to-one correspondence with the operators are created in the network element management system, and the management domains are independent of each other; and a centralized management module, which is configured to centrally manage network elements according to the network element management instructions received from the different operators.

8. The system of claim 7, further comprising a management domain creating module, which is configured to create a basic operator; and configure the management domains in one-to-one correspondence with the operators through the basic operator.

9. The system of claim 7 or 8, wherein each of the management domains comprises network elements subject to an operation authority of a respective one of the operators corresponding to the each of the management domains.

10. The system of claim 7, further comprising an alarm module, which is configured to raise an alarm when a conflict occurs between the management domains corresponding to the different operators.

11. The system of claim 7, wherein communication between the network element management system and the operators is implemented through one of the following modes:
the network element management system uses different IP addresses for the different operators; and
the network element management system uses a same IP address in different Layer 2 domains for the different operators.

12. The system of claim 11, wherein the communication between the network element management system and the operators is encrypted communication.

13. A computer-readable storage medium, which is configured to store computer-executable instructions which, when executed by a processor, execute the method of any one of claims 1 to 6.
